# EUROPÄISCHE PATENTANMELDUNG

(11) **EP 1 418 212 A1**
(43) Veröffentlichungstag der Anmeldung: **12.05.2004**
(21) Anmeldenummer: 03023421.5
(22) Anmeldetag: 17.10.2003
(51) Int. Cl.: C09J 7/02, C09J 153/00

(54) **Transparenter Haftklebefolienstreifen**

(30) Priorität: 08.11.2002 DE 10252088
(71) Anmelder: Tesa AG, 20253 Hamburg (DE)
(72) Erfinder: Krawinkel, Thorsten, Dr., 22457 Hamburg (DE); Junghans, Andreas, 22457 Hamburg (DE); Lühmann, Bernd, Dr., 22844 Norderstedt (DE)

(57) **Zusammenfassung**

Transparenter Haftklebfolienstreifen aus mindestens drei Schichten, der sich durch dehnendes Verstrecken im wesentlichen in der Verklebungsebene rückstands- und zerstörungsfrei wieder ablösen lässt, wobei die beiden äußeren Schichten je aus einer transparenten Klebmasse bestehen, die auf Basis von hydrierten Vinylaromatenblockcopolymeren und Klebharzen aufgebaut ist, mindestens eine Schicht zwischen den beiden äußeren Schichten vorhanden ist, die aus einer transparenten Klebmasse basierend auf Vinylaromatenblockcopolymeren aufgebaut ist und die eine höhere Reißdehnung aufweist als die beiden äußeren Schichten.

## Beschreibung

Die Erfindung betrifft einen transparenten, hoch alterungsstabilen Haftklebfolienstreifen auf der Basis von Styrolblockcopolymeren, welcher zur Schaffung einer durch dehnende Verstreckung in Richtung der Verklebungsebene wieder lösbare Verbindung eingesetzt werden kann.

Elastisch oder plastisch hochdehnbare Selbstklebebänder, welche sich durch dehnendes Verstrecken in der Verklebungsebene rückstands- und zerstörungsfrei wieder ablösen lassen, sind beispielsweise aus der US 4,024,312 A, DE 33 31 016 C2, WO 92/11332 A1, WO 92/11333 A1, DE 42 22 849 C1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 858 A1, WO 99/37729 A1 und DE 100 03 318 A1 bekannt und werden nachfolgend auch als stripfähige Selbstklebebänder bezeichnet.

Eingesetzt werden solche stripfähigen Selbstklebebänder häufig in Form von ein- oder beidseitig haftklebrigen Klebfolienstreifen, die bevorzugt einen nicht haftklebrigen Anfassbereich aufweisen, von welchem aus der Ablöseprozess eingeleitet wird. Besondere Anwendungen entsprechender Selbstklebebänder finden sich unter anderem in DE 42 33 872 C1, DE 195 11 288 C1, US 5,507,464 A, US 5,672,402 A und WO 94/21157 A1. Spezielle Ausführungsformen sind auch in der DE 44 28 587 C1, DE 44 31 914 C1, WO 97/07172 A1, DE 196 27 400 A1, WO 98/03601 A1 und DE 196 49 636 A1, DE 197 20 526 A1, DE 197 23 177 A1, DE 197 23 198 A1, DE 197 26 375 A1, DE 197 56 084 C1, DE 197 56 816 A1, DE 198 42 864 A1, DE 198 42 865 A1, WO 99/31193 A1, WO 99/37729 A1, WO 99/63018 A1, WO 00/12644 A1 und DE 199 38 693 A1 beschrieben.

Bevorzugte Einsatzgebiete vorgenannter stripfähiger Klebfolienstreifen beinhalten insbesondere die rückstands- und zerstörungsfrei wieder ablösbare Fixierung leichter bis mittelschwerer Gegenstände im Wohn-, Arbeits- und Bürobereich. Sie ersetzen hierbei klassische Befestigungsmittel wie zum Beispiel Stecknadeln, Pin-Nadeln, Heftzwecken, Nägel, Schrauben, klassische Selbstklebebänder und Flüssigklebstoffe. Wesentlich für den erfolgreichen Einsatz der oben genannten Klebfolienstreifen ist neben der Möglichkeit des rückstands- und zerstörungsfreien Wiederablösens verklebter Gegenstände deren einfache und schnelle Verklebung sowie für die vorgesehene Verklebungsdauer deren sicherer Halt. Hierbei ist insbesondere zu berücksichtigen, dass die Funktionsfähigkeit der Klebestreifen auf einer Vielzahl von Substraten gegeben sein muss, um als Universalfixierung im Wohn-, Arbeits- und Bürobereich dienen zu können.

Obwohl in der oben zitierten Literatur eine breite Palette von Haftklebemassen für die Verwendung in stripfähigen Selbstklebebändern beschrieben werden, weisen aktuell im Markt befindliche Handelsprodukte (zum Beispiel tesa® Powerstrips® der tesa AG, 3M Command® Adhesive Klebstreifen der Firma 3M sowie Plastofix® Formuli Force 1000 Klebestreifen der Firma Plasto S.A.) sämtlich Haftklebemassen auf Basis von Styrolblockcopolymeren auf.
Typischerweise finden lineare oder radiale Blockcopolymere auf Basis von Polystyrolblöcken und Polybutadienblöcken und/oder Polyisoprenblöcken Verwendung, also zum Beispiel radiale Styrol-Butadien-(SB)ₙ und/oder lineare Styrol-Butadien-Styrol (SBS)-und/oder lineare Styrol-Isopren-Styrolblockcopolymere (SIS). Vorteile der vorgenannten styrolblockcopolymerbasierenden Haftklebemassen für den Einsatz in stripfähigen Selbstklebebändern sind zum Beispiel die mit ihnen erreichbaren sehr hohen Verklebungsfestigkeiten (bedingt unter anderem durch die gleichzeitige Realisierung einer sehr hohen Kohäsion und sehr hoher Klebkräfte), eine ausgeprägte Reduzierung der Haftklebrigkeit beim verstreckenden Ablösen (welches den Ablöseprozess deutlich erleichtert oder gar erst ermöglicht) sowie eine sehr hohe Zugfestigkeit, welche insbesondere für einen reißerfreien Ablöseprozess wesentlich ist.

Nachteil dieser auf ungesättigten Elastomeren basierenden Styrolblockcopolymere ist ihre geringe UV-Stabilität, weshalb Klebfolienstreifen, die aus diesen Klebemassen hergestellt werden, nicht der UV-Strahlung ausgesetzt, also beispielsweise nicht am Fenster verwendet werden können.

Gerade bei einer Anwendung an Fensterscheiben ist es für den Anwender häufig entscheidend, dass der Klebfolienstreifen möglichst unauffällig, das heißt, möglichst farblos und transparent ist.
Die meisten im Markt befindlichen Klebestreifen haben entweder einen Schaumstoffzwischenträger, mit dem ein transparenter Klebestreifen nicht zu realisieren ist, oder die verwendeten Klebmassen enthalten zur Verbesserung der Alterungsstabilität anorganische Füllstoffe.

Eine Möglichkeit, die Alterungsstabilität zu erhöhen, ist der Einsatz von im Mittelblock hydrierten Styrolblockcopolymeren wie zum Beispiel Styrol-Ethylen/Butylen-Styrol-Blockcopolymeren, SEBS, erhalten durch Hydrierung von SBS, oder Styrol-Ethylen/Propylen-Styrol-Blockcopolymeren, SEPS, erhalten durch Hydrierung von SIS. Nachteilig bei Einsatz dieser Elastomere ist die erfahrungsgemäß deutlich niedrigere Verklebungsfestigkeit als bei Verwendung von SIS oder SBS.

Eine transparente UV-stabile Klebmasse mit erhöhter Verklebungsfestigkeit, die für den Einsatz in stripfähigen Klebfolienstreifen geeignet ist, ist in DE 100 03 318 A1 beschrieben.
Durch den Einsatz eines speziellen Styrolblockcopolymers auf Basis eines hydrierten Mittelblocks, der nichthydrierte polymere Seitenketten enthält, können Klebmassen für stripfähige Klebfolienstreifen hergestellt werden.
Nachteilig an Klebfolienstreifen hergestellt aus beschriebener Klebmasse ist, dass sie beim Ablöseprozess relativ leicht reißen oder den Untergrund, besonders bei empfindlichen Papieren und Tapeten beschädigen können

Mehrschichtige Klebfolien, die sich durch Ziehen in der Verklebungsebene rückstandsfrei entfernen lassen, sind bereits bekannt, weisen aber wesentliche Nachteile auf.
So beschreibt WO 92/11333 A1 ein stripfähiges Klebeband, welches als Träger eine hochverstreckbare Folie nutzt, die nach Verstreckung ein Rückstellvermögen von <50 % aufweist und somit nicht kautschukelastisch ist.
WO 92/11332 A1 beschreibt einen durch Ziehen in der Verklebungsebene wiederablösbaren Klebfolienstreifen, für welchen als Träger sowohl eine verstreckbare, hoch elastische als auch eine hochverstreckbare, im wesentlichen nicht rückstellende Folie genutzt werden kann. Als Klebmassen kommen ausschließlich UV-vernetzte Acrylatcopolymere zum Einsatz, mit denen nicht die hohen Verklebungsfestigkeiten erreicht werden können.

In US 4,024,312 A werden stripfähige Klebfolienstreifen beschrieben, die eine Mittelschicht aus Styrolblockcopolymeren abgemischt mit Harzen enthalten. Allerdings sind diese Harze nur verträglich mit dem Styrolblock, wodurch die Dehnung der Mittelschicht deutlich erniedrigt wird und niedriger liegt als bei den Außenschichten.
Die Klebstreifenfolien der aufgezählten Druckschriften haben alle den Nachteil, dass durch das Fehlen von mittelblockverträglichen Klebharzen in der Mittelschicht diese Klebharze, wie in DE 197 08 366 A1 beschrieben, aus den äußeren Schichten in die Mittelschicht diffundieren können und damit sich die Eigenschaften der Klebfolienstreifen im Laufe der Zeit ändern.

Ein stripfähiger Klebfolienstreifen mit einem geschäumten, nicht haftklebrigen Folienträger wird in WO 95/06691 A1, DE 196 49 727 A1, DE 196 49 728 A1, DE 196 49 729 A1 und DE 198 20 858 A1 beschrieben. Durch den Schaumstoffzwischenträger ist aber eine Transparenz des Klebfolienstreifen nicht erreichbar.

Ziel der Erfindung ist es daher, einen Haftklebestreifen zu schaffen, der sowohl UV-stabil und transparent ist, der eine für die Anwendung angemessene Verklebungsleistung aufweist und der beim Ablöseprozess deutlich weniger zum Abreißen und Beschädigen des Untergrundes neigt als die Haftklebestreifen, die aus dem Stand der Technik bekannt sind.

Die Aufgabe wird mit einem gattungsgemäßen Haftklebfolienstreifen erfindungsgemäß gelöst, wie er im Hauptanspruch niedergelegt ist. Gegenstand der Unteransprüche sind dabei vorteilhafte Weiterbildungen des Haftklebfolienstreifens.

Demgemäss betrifft die Erfindung einen transparenten Haftklebfolienstreifen aus mindestens drei Schichten, der sich durch dehnendes Verstrecken im wesentlichen in der Verklebungsebene rückstands- und zerstörungsfrei wieder ablösen lässt, wobei
- die beiden äußeren Schichten je aus einer transparenten Klebmasse bestehen, die auf Basis von hydrierten Vinylaromatenblockcopolymeren und Klebharzen aufgebaut ist,
- mindestens eine Schicht zwischen den beiden äußeren Schichten vorhanden ist, die aus einer transparenten Klebmasse basierend auf Vinylaromatenblockcopolymeren aufgebaut ist und die eine höhere Reißdehnung aufweist als die beiden äußeren Schichten.

Bevorzugt ist eine Ausführungsform des Klebfolienstreifens, bei der nur eine mittlere Schicht vorhanden ist. Weiter vorzugsweise bestehen die beiden äußeren Schichten aus derselben Klebmasse.
Die zwischen den beiden äußeren Schichten liegende Schicht wird in der Folge auch Mittelschicht genannt.

Damit einschlägig bekannte stripfähige Klebfolienstreifen leicht und rückstandsfrei wieder abgelöst werden können, müssen sie bestimmte klebtechnische Eigenschaften besitzen.
Beim Verstrecken muss die Klebrigkeit der Klebfolienstreifen deutlich sinken. Je niedriger die Klebleistung im verstreckten Zustand ist, umso weniger stark wird der Untergrund beim Ablösen beschädigt.

Besonders deutlich ist diese Eigenschaft bei Klebmassen auf Basis von nicht-hydrierten Styrolblockcopolymeren zu erkennen, bei denen in der Nähe der Streckgrenze die Klebrigkeit auf unter 10 % sinkt. Etwas schlechter verhalten sich Klebmassen auf der Basis von hydrierten Styrolblockcopolymeren, deren Klebrigkeit nur auf ca. 20 % an der Streckgrenze sinkt.

Klebfolienstreifen, die Klebmassen auf Basis hydrierter Styrolblockcopolymere enthalten, müssen also sehr dicht an die Streckgrenze gedehnt werden, um eine Ablösung zu erreichen. In der Nähe der Streckgrenze nimmt allerdings die Dehnspannung extrem stark zu. Das hat zur Folge, dass die aufzuwendende Stripkraft zum Wiederablösen des Klebestreifens und die Reißkraft dichter beieinander liegen als bei nicht-hydrierten Styrolblockcopolymeren. Es kommt daher häufiger zum Abreißen der Klebestreifen während des Ablösevorganges.

Durch einen erfindungsgemäßen Mehrschichtaufbau mit einer Mittelschicht, die eine höhere Reißdehnung als die äußeren Schichten besitzt, ist es möglich, die Klebmassen der äußeren Schichten über ihre Streckgrenze hinaus zu dehnen.

Überraschenderweise wird durch solch ein Dehnen über die Streckgrenze hinaus die Klebrigkeit noch weiter gesenkt. Die äußeren Schichten reißen dabei nicht, sondern bleiben gut mit der Mittelschicht verbunden.
Bei der Anwendung eines Klebfolienstreifens aus mehreren Schichten, bei dem die mittlere Schicht beziehungsweise die mittleren Schichten eine höhere Dehnfähigkeit besitzen als die äußeren, ist die beim Ablösevorgang ermittelte Dehnung erstaunlicherweise tatsächlich größer als bei Verwendung von Klebfolienstreifen mit einem Einschichtaufbau, der nur aus der Klebmasse der äußeren Schichten besteht.
Ein reißerfreies und beschädigungsloses Ablösen kann damit erreicht werden.

Beim Aufbau der mehrschichtigen Klebfolienstreifen ist darauf zu achten, dass die Dicke der einzelnen Schichten die richtige Größe hat, aber auch dass das Verhältnis der Dicken der einzelnen Schichten passend zueinander ist. Vorzugsweise ist die Summe der Dicke der äußeren Schichten nicht größer als 30% der Dicke der Gesamtschichtdicke der Klebmasse.

Damit stripfähige Klebebänder leicht und rückstandsfrei wieder abgelöst werden können, müssen sie neben den oben beschriebenen klebtechnischen auch einige bestimmte mechanische Eigenschaften besitzen. Das Verhältnis der Reißkraft und der Stripkraft muss größer als zwei, bevorzugt größer als drei sein.
Dabei ist die Stripkraft diejenige Kraft, die aufgewendet werden muss, um einen Klebestreifen aus einer Klebfuge durch paralleles Ziehen in Richtung der Verklebungsebene wieder zu lösen. Diese Stripkraft setzt sich aus der Kraft setzt, die wie oben beschrieben für das Ablösen des Klebebandes von den Verklebungsuntergründen nötig ist, und der Kraft, die zur Verformung des Klebebandes aufgewendet werden muss. Die zur Verformung des Klebebandes erforderliche Kraft ist abhängig von der Dicke.
Die zum Ablösen benötigte Kraft ist dagegen in dem betrachteten Bereich unabhängig von der Dicke der Klebestreifen.

Die Reißfähigkeit steigt hingegen proportional zu der Dicke der Klebestreifen an. Hieraus folgt, dass für Selbstklebebänder mit einem Einschichtaufbau, wie in der DE 33 31 016 C2 offenbart, die Reißfestigkeit unterhalb einer bestimmten Dicke kleiner als die Abzugskraft wird. Oberhalb einer bestimmten Dicke wird das Verhältnis von Abzugskraft zur Stripkraft hingegen größer als zwei. Wenn die Reißkraft der eingesetzten Polymere aber sehr niedrig ist, folgt daraus, dass die Dicke sehr groß werden muss, wodurch auch die Stripkräfte ansteigen. Um zu vermeiden, dass die zum Strippen benötigte Kraft zu groß wird, sollte die Stripkraft pro Klebestreifen jedoch nicht größer als 30 N sein.

In einem Mehrschichtaufbau gilt die Dickenabhängigkeit wesentlich für die mittlere Schicht, die hauptsächlich für die Reißfestigkeit verantwortlich ist. Die äußeren Schichten werden beim Ablösen über ihre Streckgrenze gedehnt und tragen so nur wenig zur Reißfestigkeit bei. Da wie oben beschrieben die Dehnspannung in der Nähe der Streckgrenze sehr groß wird und diese Dehnspannung proportional zur Dicke ist, ist es sinnvoll die äußeren Schichten möglichst dünn zu wählen, vorzugsweise ist die Dicke der äußeren Schichten zusammengenommen nicht mehr als 30% der Dicke der Gesamtklebmasse

Für die Mittelschicht kommen geeigneterweise insbesondere Klebmassen mit einem niedrigen Modul und damit einer niedrigen Streckspannung zum Einsatz, um die gesamten Stripkräfte möglichst niedrig zu halten. Andererseits ist es vorteilhaft, wenn die Mittelschicht eine möglichst hohe Reißkraft besitzt. Außer der Verbesserung der Ablöseeigenschaften durch Einstellung der Stripkraft, der Stripdehnung und der Reißkraft bietet die Mittelschicht noch einen weiteren Vorteil. Wie bekannt haben Klebmassen auf der Basis von hydrierten Styrolblockcopolymeren eine vergleichsweise niedrige Anfassklebrigkeit, die für schnelle Verklebung aber essentiell ist. Durch eine Mittelschicht, die weicher als die äußeren Schichten ist, lässt sich neben der Anfassklebrigkeit der Außenschichten auch die Anpassungsfähigkeit auf raue Untergründe verbessern.
Demgemäss wird eine Ausführungsform der Haftklebestreifen bevorzugt, bei der die Mittelschicht beziehungsweise Mittelschichten weicher sind als die äußeren Schichten.

Besonders geeignet als Mittelschichten sind Klebmassen auf Basis von nicht-hydrierten Styrolblockcopolymeren (Styrol-Butadien-Styrol- beziehungsweise Styrol-Isopren-Styrol-Blockcopolymere), die eine höhere Dehnfähigkeit als Klebmassen auf Basis hydrierter Styrolblockcopolymere besitzen. Ebenso ist die Reißkraft und die Härte wie gewünscht einstellbar.

Die äußeren Schichten bestehen vorzugsweise aus hydrierten Styrolblockcopolymergemischen, die weiter vorzugsweise einen niedrigen Gehalt an Polystyrol aufweisen und einen hohen Zweiblockgehalt besitzen, um möglichst hohe Anfassklebrigkeiten und Verklebungsfestigkeiten auch auf rauen Untergründen zu gewährleisten.

Erfindungsgemäße Haftklebmassen basieren auf ausgewählten Styrolblockcopolymeren. Die Haftklebrigkeit der Polymerengemische wird durch Zugabe von mit der Elastomerphase mischbaren Klebharzen erreicht. Als weitere Abmischkomponenten können u. a. Alterungsschutzmittel, Verarbeitungshilfsmittel, Farbstoffe, optische Aufheller, Stabilisatoren, Endblockverstärkerharze sowie gegebenenfalls weitere Polymere, welche bevorzugt elastomerer Natur sind, genutzt werden.
Die Art und Menge der Abmischkomponenten kann bedarfsweise ausgewählt werden.

Bei den Blockcopolymeren der äußeren Schichten handelt es sich weiter vorzugsweise um zumindest zum Teil im Mittelblock hydrierte Blockcopolymere.

Die Styrolblockcopolymergemische der äußeren Schichten sind in einer vorteilhaften Ausführungsform auf der Basis von Styrol-Ethylen/Butylen-Styrol (SEBS) beziehungsweise Styrol-Ethylen/Propylen-Styrol (SEPS) aufgebaut. Es kann sich dabei um radiale, sternförmige oder lineare Systeme handeln. Der Blockpolystyrolgehalt liegt vorzugsweise zwischen 10 Gew.-% und 35 Gew.-%, besonders bevorzugt zwischen 12,5 Gew.-% bis 20 Gew.-%. Der Zweiblockgehalt liegt zwischen 10 Gew.-% und 65 Gew.-% bevorzugt zwischen 25 Gew.-% und 60 Gew.-%. Es kann sich dabei auch um hydrierte Styrolblockcopolymere handeln, die nicht-hydrierte Seitenketten besitzen.

Anstelle von Styrol-Ethylen/Butylen-Blockcopolymeren und Styrol-Ethylen/Propylen-Blockcopolymeren können erfindungsgemäß ebenfalls Hydrierungsprodukte weiterer polydienhaltiger Blockcopolymere genutzt werden, wie zum Beispiel die Hydrierungsprodukte von Copolymeren mehrerer unterschiedlicher 1,3-Diene. Erfindungsgemäß nutzbar sind des weiteren funktionalisierte Blockcopolymere wie zum Beispiel maleinsäureanhydridmodifizierte, silanmodifizierte oder epoxidierte hydrierte Styrolblockcopolymere

In der oder den Mittelschichten kommen Styrolblockcopolymere zum Einsatz, die eine höhere Dehnung als diejenigen der äußeren Schichten besitzen. Vorzugsweise handelt es sich dabei um nicht-hydrierte Styrolblockcopolymere wie SIS oder SBS. Die eingesetzten Polymere können wiederum radial, sternförmig oder linear aufgebaut sein. Der Blockpolystyrolgehalt dieser Elastomere liegt vorzugsweise zwischen 10 Gew.-% und 35 Gew.-%, besonders bevorzugt zwischen 20 Gew.-% und 32 Gew.-%.
Ebenfalls sind modifizierte hydrierte Styrolblockcopolymere, zum Beispiel durch Anpfropfung nicht-hydrierter Seitenketten nutzbar, die eine höhere Dehnung als die Elastomere in den äußeren Schichten besitzen.

Unter dem Begriff Styrolblockcopolymeren werden hier auch folgende Produkte verstanden:

Anstelle der vorbeschriebenen Polystyrolblöcke können auch Polymerblöcke auf Basis anderer aromatenhaltiger Homopolymere oder Copolymere mit Glasübergangstemperaturen von mehr als etwa 75 °C eingesetzt werden. Als Homo- und Copolymere werden bevorzugt C-4- bis C-12- Aromaten eingesetzt. Geeignete Polymerblöcke sind beispielsweise alpha-methylstyrolhaltige Aromatenblöcke.

Jedoch sind auch Polymerblöcke auf der Basis von (Meth)acrylat-Homopolymeren oder (Meth)acrylatcopolymeren mit Glasübergangstemperaturen von mehr als 75 °C nutzbar. Hierbei können sowohl Blockcopolymere zum Einsatz kommen, welche als Hartblöcke ausschließlich solche auf Basis von (Meth)Acrylatpolymeren nutzen, als auch solche, welche sowohl Polyaromatenblöcke, zum Beispiel Polystyrolblöcke, als auch Poly(meth)acrylatblöcke nutzen.

Der Anteil von Styrolblockcopolymer in den Klebemassen der mittleren Schichten und/oder der äußeren Schichten beträgt in einer vorteilhaften Ausführungsform 20 bis 70 Gew.-%, vorzugsweise 30 bis 60 Gew.-% und besonders bevorzugt 35 bis 55 Gew.-%.

Als Klebrigmacher nutzen erfindungsgemäße Haftklebemassen wegen der geforderten Farblosigkeit als Hauptkomponente insbesondere hydrierte Klebharze. Bevorzugt geeignet sind unter anderem:
- hydrierte Polymerisate des Dicyclopentadiens (zum Beispiel Escorez 5300er Serie; Exxon Chemicals)
- hydrierte Polymerisate von bevorzugt C-8 und C-9-Aromaten (zum Beispiel Regalite und Regalrez Serien; Eastman Chemicals // Arkon P Serie; Arakawa); diese können durch Hydrierung von Polymerisaten aus reinen Aromatenströmen oder durch Hydrierung von Polymerisaten von Gemischen unterschiedlichen Aromaten entstehen.
- teilhydrierte Polymerisate von C-8 und C-9-Aromaten (zum Beispiel Regalite und Regalrez Serien; Eastman Chemicals // Arkon M; Arakawa)
- hydrierte Polyterpenharze (zum Beispiel Clearon M; Yasuhara)
- hydrierte C-5/C9-Polymerisate (zum Beispiel ECR-373; Exxon Chemicals)
- aromatenmodifizierte selektiv hydrierte Dicyclopentadienderivate (zum Beispiel Escorez 5600er Serie; Exxon Chemicals) sowie
- hydrierte und teilhydrierte kolophoniumbasierende Harze (zum Beispiel Foral, Foralyn; Eastman Chemicals // Hydrogral; DRT).

Die letzt genannten Klebharze können sowohl allein als auch im Gemisch eingesetzt werden. Den Hauptteil der Klebharze bilden hydrierte Kohlenwasserstoff- beziehungsweise hydrierte Polyterpenharze. Klebharze auf Basis von hydriertem Kolophonium und seinen Abkömmlingen (zum Beispiel Ester des hydrierten Kolophoniums) werden dagegen typischerweise als Abmischkomponenten gewählt.

Nicht-hydrierte Klebharze, zum Beispiel C-5-, C-9-, C5/C9- Kohlenwasserstoffharze, Polyterpenharze, aromatenmodifizierte Polyterpenharze oder Kolophoniumderivate, können in geringen Mengen in erfindungsgemäßen Formulierungen enthalten sein. Ihre Gesamtkonzentration übersteigt jedoch typischerweise nicht 20 Gew.-%, bevorzugt nicht 15 Gew.-% der gesamten Klebmassebestandteile.

Wenn die Haftklebemassen ein wasserklar transparentes Erscheinungsbild aufweisen sollen, so sind Klebharze zu nutzen, die bei einer Einsatzkonzentration von 50 Gew.-% und einer Schichtstärke von 500 µm eine Eigenfarbe von 2,0, gemessen entsprechend der Gardner Farbskala, nicht überschreiten. In geringeren Mengen genutzte Klebharze können entsprechend ihrer Einsatzkonzentration auch Eigenfarben > Gardner 2,0 aufweisen.

Nach DIN ISO 4630 (1982-11) ist die Gardner-Farbzahl eine Farbzahl für die Kennzeichnung der Farbe von klaren Flüssigkeiten (zum Beispiel Bindemittel für Lacke und Beschichtungsstoffe). Sie wird ermittelt durch visuellen Vergleich der Farbe einer Probe in einem Glasrohr mit der Farbe von definierten Farbstandards. Die Farbe der Probe, die dem jeweiligen Farbstandard am nächsten kommt, wird als Gardner-Farbzahl bezeichnet.

Als Bezugsstandards der Gardner-Farbskala dienen 18 Glas-Farbstandards mit jeweils definierten Normfarbwertanteilen und Lichtdurchlässigkeiten.

Um eine Diffusion von Harzen oder anderen niedermolekularen Bestandteilen von einer Schicht in die andere zu unterdrücken, sollten in den einzelnen Schichten die gleichen Harze eingesetzt werden und ähnliche Konzentrationen gewählt werden.

Als weitere Additive können typischerweise genutzt werden:
- primäre Antioxidanzien, wie zum Beispiel sterisch gehinderte Phenole
- sekundäre Antioxidanzien, wie zum Beispiel Phosphite oder Thioether
- Prozessstabilisatoren, wie zum Beispiel C-Radikalfänger
- Lichtschutzmittel, wie zum Beispiel UV-Absorber oder sterisch gehinderte Amine
- Verarbeitungshilfsmittel
- Endblockerstärkerharze sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene, wie natürliches oder synthetisch erzeugtes Polyisopren oder Polybutadien, chemisch im wesentlichen gesättigte Elastomere, wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe, wie zum Beispiel halogenhaltige, acrylathaltige oder vinyletherhaltige Polyolefine, um nur einige wenige zu nennen.

Plastifizierungsmittel, wie zum Beispiel Flüssigharze, Weichmacheröle oder niedermolekulare flüssige Polymere, wie zum Beispiel niedermolekulare Polybutene mit Molmassen < 1500 g/mol (Zahlenmittel), werden lediglich in sehr geringen Mengen von ≤ 5 Gew.-% eingesetzt, bevorzugt wird auf ihre Verwendung vollständig verzichtet.

Da die Mittelschicht/en bei Verwendung von nicht-hydrierten Styrolblockcopolymeren nicht UV-stabil sind, sind in einer weiteren bevorzugten Ausführungsform der Erfindung die äußeren Schichten mit Hilfe von UV-Absorbern UV-undurchlässig gestaltet.

Die Herstellung und Verarbeitung der Haftklebemassen kann sowohl aus der Lösung als auch aus der Schmelze erfolgen. Besonders bevorzugt ist insbesondere bei Schichtdicken über 100 µm jedoch die Fertigung der Haftklebemassen aus der Schmelze, wobei insbesondere Batchverfahren oder kontinuierliche Verfahren eingesetzt werden können. Besonders vorteilhaft ist die kontinuierliche Fertigung der Haftklebemassen mit Hilfe eines Extruders.
Die Vereinigung mehrerer Schichten kann durch direkte Beschichtung oder durch Laminierung, insbesondere Heißlaminierung erfolgen. Eine besonders geeignete Methode zur Herstellung des Schichtenverbundes ist die Coextrusion, bei der die Klebmassen der einzelnen Schichten in der Schmelze zusammengeführt werden.

Die entstandenen Haftklebfolien können als Klebebandrollen, Klebestreifen oder Stanzlinge konfektioniert werden. Optional kann ein nicht haftklebriger Anfasserbereich vorgesehen sein, von welchem aus der Ablöseprozess ausgeführt werden kann.

Nachfolgend wird die Erfindung durch einige Beispiele näher erläutert.

Die Haftklebemassen wurden hierbei in einem heizbaren Kneter mit Sigma-Schaufel (Werner und Pfleiderer LUK 1,0 K3 ausgerüstet mit einem Thermostaten LTH 303 der Firma mgw LAUDA) bei einer Temperatur von ca. +160 bis +180 °C und unter Inertisierung mit CO₂ als Schutzgas zu einer homogenen Mischung verarbeitet. Nach dem Erkalten wurden durch ca. 10-minütiges Verpressen der Klebmasse bei +120 °C bis +140 °C in einer temperierbaren Presse (Typ KHL 50 der Fa. Bucher-Guyer) einschichtige Klebstoff-Folienstücke der Dicke von 500 µm ± 50 µm für die Mittelschichten und von 100 µm ± 20 µm für die äußeren Schichten hergestellt.

Die mehrschichtigen Proben werden durch Lamination einschichtiger Klebfolien an der genannten Presse bei 120 °C erhalten.
Durch Ausstanzen wurden Haftklebestreifen der gewünschten Abmessungen erhalten.

Allen folgenden Beispielen wurden als Alterungsschutzmittel 0,5 Teile Irganox 1010 zugesetzt.

### Vergleichsbeispiel 1:

Einschichtiger Aufbau (700 µm Dicke):

| | |
|---|---|
| 50 Teile | Kraton G 1657 |
| 50 Teile | Regalite R 1100 |

### Vergleichsbeispiel 2:

Einschichtiger Aufbau (700 µm Dicke):

| | |
|---|---|
| 35 Teile | Kraton G RP 6919 |
| 15 Teile | Kraton G 1657 |
| 50 Teile | Regalite R 1100 |

### Beispiel 3:

Mehrschichtaufbau:

| Mittelschicht (500 µm) | |
|---|---|
| 50 Teile | Vector 4111 |
| 50 Teile | Regalite R 1100 |

Äußere Schichten (je 100 µm):

| | |
|---|---|
| 50 Teile | Kraton G 1657 |
| 50 Teile | Regalite R 1100 |

### Beispiel 4:

Mehrschichtaufbau:

| Mittelschicht (500 µm) | |
|---|---|
| 50 Teile | Vector 4111 |
| 50 Teile | Regalite R 1100 |

Äußere Schichten (je 100 µm):

| | |
|---|---|
| 50 Teile | Septon 2063 |
| 50 Teile | Regalite R 1100 |

### Beispiel 5:

Mehrschichtaufbau: Mittelschicht (500 µm)

| | |
|---|---|
| 50 Teile | Vector 4111 |
| 50 Teile | Regalite R 1100 |

Äußere Schichten (je 100 µm):

| | |
|---|---|
| 35 Teile | Kraton G RP 6919 |
| 15 Teile | Kraton G 1657 |
| 50 Teile | Regalite R 1100 |

Eigenschaften der eingesetzten Rohstoffe:
- Kraton G 1657 SEBS, ca. 70 Gew.-% 3-Block, ca. 30 Gew.-% 2-Block; Blockpolystyrolgehalt: 13 Gew.-%; Kraton Polymers
- Kraton G RP 6919 (SEB)₂l₂, ca. 80 Gew.-% radialer Multiblock, ca. 20 Gew.-% 2-Block; Blockpolystyrolgehalt: 18 Gew.-%; Kraton Polymers
- Septon 2063 SEPS, ca. 40 Gew.-% 3-Block, ca. 60 Gew.-% 2-Block Blockpolystyrolgehalt: 13 Gew.-%; Kuraray
- Vector 4111 SIS, > 95 Gew.-% 3-Block; Blockpolystyrolgehalt: 18 Gew.- %; Exxon Chemical
- Regalite R 1100 Hydriertes Aromatenharz; Erweichungstemperatur (Ring & Ball): ca. +99 °C; Eastman
- Irganox 1010 sterisch gehindertes Phenol; Ciba Additive

Bei den beispielhaften Haftklebestreifen wurden die folgenden mechanischen und klebtechnischen Daten ermittelt:

| Haftklebemasse Beispiel Nr. | Zugfestigkeit in MPa // Dehnung in % | Strip-Spannung in MPa | Schälgeschwin-digkeit in mm/24 h | Kippscherstandzeit in Tagen | Anzahl Reißer im Reißertest |
|---|---|---|---|---|---|
| 1 | 5,2//740 | 1,1 | 17 | 3 | 12 |
| 2 | 7,8//900 | 1,1 | 14 | 32 | 6 |
| 3 | 10,2//1140 | 1,4 | 22 | 5 | 1 |
| 4 | 9,7//1180 | 1,3 | 9 | 40 | 0 |
| 5 | 10,5//1210 | 1,4 | 6 | 67 | 1 |

Die Vergleichsbeispiele 1 und 2 zeigen, dass mit einem Einschichtaufbau zwar vernünftige Klebleistungen möglich sind, allerdings auf Kosten hoher Reißerzahlen. An den Beispielen 3 bis 5 mit Mehrschichtaufbau ist zu erkennen, dass bei sogar verbesserten klebtechnischen Eigenschaften die Anzahl der Reißer deutlich gesenkt werden kann.

Während es bei den ersten beiden Beispielen nach längerer Verklebung (3 Monate bei 40 °C) auf Papier zu Faserausrissen kommt, im Beispiel 1 zu sehr deutlichen, im Beispiel 2 schon wesentlich geringer, aber deutlich sichtbar, ist dieses Phänomen bei den Beispielen 3 bis 5 nicht zu beobachten.

Die mechanischen und klebtechnischen Daten wurden wie folgt ermittelt:

Die Zugfähigkeit beziehungsweise maximale Dehnung wurde in Anlehnung an DIN 53504 unter Verwendung von Schulterstäben der Größe S3 bei einer Separationsgeschwindigkeit von 300 mm pro Minute gemessen.

Die Ablösekraft (Stripkraft bzw. Stripspannung) wurde mit Hilfe einer Klebstofffolie mit den Abmessungen 50 mm Länge x 20 mm Breite mit einem am oberen Ende nicht haftklebrigem Anfasserbereich ermittelt. Die Klebstofffolie wurde zwischen zwei deckungsgleich zueinander angeordneten Stahlplatten mit einer Abmessung von 50 mm x 30 mm mit einem Anpressdruck von jeweils 50 Newton verklebt. Die Stahlplatten haben an ihrem unteren Ende je eine Bohrung zur Aufnahme eines S-förmigen Stahlhakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen werden für eine Dauer von 24 Stunden bei +40 °C gelagert. Nach der Rekonditionierung auf Raumtemperatur wird der Klebfolienstreifen mit einer Zuggeschwindigkeit von 1000 mm pro Minute parallel zur Verklebungsebene und kontaktfrei zu den Kantenbereichen der beiden Stahlplatten herausgelöst. Dabei wird die erforderliche Ablösekraft in Newton (N) gemessen. Angegeben wird der Mittelwert der Stripspannungswerte (in N pro mm²), gemessen in dem Bereich, in welchem der Klebestreifen auf einer Verklebungslänge zwischen 10 mm und 40 mm von den Stahluntergründen abgelöst ist.

Zur Ermittlung der Schälfestigkeit werden die zu untersuchenden Haftklebestreifenmuster einseitig vollflächig mit einer 23 µm starken PET-Folie (beispielsweise Hostaphan RN 25; Mitsubishi Chemicals) luftblasenfrei einkaschiert. Danach wird die zweite Klebfolienstreifenseite an einem Ende mit einem ca. 6 mm langen Folienstreifen (ebenfalls Hostaphan RN 25) abgedeckt, so dass an diesem Ende ein beidseitig nicht haftklebriger Anfasserbereich entsteht. Hiernach wird der zu prüfende Klebfolienstreifen vorderseitig mit leichtem Fingerandruck auf den Prüfuntergrund (gestrichene Raufasertapete: Tapete = Erfurt Körning 52, Farbe = Herbol Zenit LG, Tapete verklebt auf Pressspanplatte) aufgeklebt. Die Haftklebfolienmuster werden anschließend 10 Sekunden lang bei einem Anpressdruck von 90 N pro 10 cm² Haftklebfläche angedrückt. Danach werden die Haftklebemuster 15 Minuten bei 40 °C konditioniert. Die Prüfplatten werden anschließend horizontal fixiert, so dass der anfassbare Bereich der Klebestreifen nach unten gerichtet ist. An den nicht klebenden Anfasser wird mit Hilfe einer Klemme (20 g) ein Gewicht von 50 g befestigt, so dass die entstehende Schälbelastung (ca. 0,7 N pro 20 mm Klebstreifenbreite) orthogonal zur Verklebungsebene wirkt. Nach einer Testphase von 15 Minuten und wiederholt nach 24 Stunden wird diejenige Strecke markiert, die der Klebestreifen vom Verklebungsuntergrund seit Versuchsbeginn abgeschält ist. Der Abstand zwischen den beiden Markierungen wird als Schälweg (Einheit: mm pro 24 Stunden) angegeben.

Zur Bestimmung der Kippscherfestigkeit wird die zu prüfende Klebstofffolie der Abmessung 20 mm x 50 mm, die an einem Ende beidseitig mit einem nicht haftklebrigen Anfasserbereich versehen ist (erhalten durch Aufkaschieren von 25 µm starker biaxial verstreckter Polyesterfolie der Abmessungen 20 mm x 13 mm (Hostaphan RN 25)) mittig auf eine hochglanzpolierte quadratische Stahlplatte der Abmessung 40 mm Länge x 40 mm Breite x 3 mm Dicke verklebt. Die Stahlplatte ist rückseitig mittig mit einem 10 cm langen Stahlstift versehen, welcher vertikal auf der Plattenfläche sitzt. Die erhaltenen Probekörper werden mit einer Kraft von 100 N auf den zu prüfenden Haftgrund (Stahl) mit einer Andruckzeit von 5 Sekunden verklebt und 5 Minuten im unbelasteten Zustand belassen. Nach Beaufschlagung der gewählten Kippscherbelastung durch Anhängen eines Gewichtes (20 N bei 50 mm Hebelarm) wird die Zeit bis zum Versagen der Verklebung (Kippscherstandzeit) ermittelt. Das Testklima ist dabei 23 °C bei einer relativen Luftfeuchtigkeit von 50 %.

Um die Reißeranfälligkeit zu testen, wurden jeweils 20 Klebestreifen der Abmessungen 20 mm x 50 mm, versehen mit einem Anfasser wie bei der Messungen der Stripspannung beschrieben, auf eine Glasplatte verklebt. Anschließend wurde den Anfasser aus der Klebfuge herausstehen lassend eine Polystyrolplatte der Abmessungen 40 mm x 40 mm auf den Klebestreifen geklebt und mit einer Kraft von 100 N angedrückt. Nach einer Aufziehzeit von 10 Tagen bei 40 °C wurden die Klebestreifen durch Ziehen gelöst, wobei in einem Winkel von 15° gezogen wurde. Notiert wurde die Anzahl der abgerissenen Klebestreifen.

## Patentansprüche

1. Transparenter Haftkfebfotienstreifen aus mindestens drei Schichten, der sich durch dehnendes Verstrecken im wesentlichen in der Verklebungsebene rückstands- und zerstörungsfrei wieder ablösen lässt, wobei
die beiden äußeren Schichten je aus einer transparenten Klebmasse bestehen, die auf Basis von hydrierten Vinylaromatenblockcopolymeren und Klebharzen aufgebaut ist,
mindestens eine Schicht zwischen den beiden äußeren Schichten vorhanden ist, die aus einer transparenten Klebmasse basierend auf Vinylaromatenblockcopolymeren aufgebaut ist und die eine höhere Reißdehnung aufweist als die beiden äußeren Schichten.

2. Haftklebfolienstreifen nach Anspruch 1, **dadurch gekennzeichnet, dass** die Blockcopolymere Polystyrolendblöcke besitzen.

3. Haftklebfolienstreifen nach Anspruch 1 oder 2, **dadurch gekennzeichnet, dass** es sich bei den Vinylaromatenblockcopolymeren der Mittelschichten um Styrol-Isopren-Styroloder Styrol-Butadien-Styrol-Blockcopolymere oder eine Mischung aus beiden handelt.

4. Haftklebfolienstreifen nach zumindest einem der Ansprüche 1 bis 3, **dadurch gekennzeichnet, dass** die beiden äußeren Schichten aus derselben Klebmasse bestehen.

5. Haftklebfolienstreifen nach zumindest einem der vorhergehenden Ansprüche, **dadurch gekennzeichnet, dass** die Blockcopolymere der mittleren Schicht beziehungsweise Schichten einen Polyvinylaromatenanteil von 10 Gew.-% bis 35 Gew.-%, bevorzugt zwischen 20 Gew.-% und 32 Gew.-%, aufweisen.

6. Haftklebfolienstreifen nach zumindest einem der vorhergehenden Ansprüche, **dadurch gekennzeichnet, dass** es sich bei den Blockcopolymeren der äußeren Schichten um zumindest zum Teil im Mittelblock hydrierte Blockcopolymere handelt.

7. Haftklebfolienstreifen nach zumindest einem der vorhergehenden Ansprüche, **dadurch gekennzeichnet, dass** mindestens eines der Styrolblockcopolymere der äußeren Schichten aus einem hydrierten Styrolblockcopolymer mit an den hydrierten Mittelblock angepfropften Polymerblock auf Basis von 1,3-ungesättigten Dienen aufgebaut ist.

8. Haftklebfolienstreifen nach zumindest einem der vorhergehenden Ansprüche **dadurch gekennzeichnet, dass** die äußeren Schichten UV-undurchlässig sind.

9. Haftklebfolienstreifen nach zumindest einem der vorhergehenden Ansprüche, **dadurch gekennzeichnet, dass** in den äußeren Schichten und in der beziehungsweise den mittleren Schichten die gleichen Harze als Klebrigmacher verwendet werden.

10. Haftklebfolienstreifen nach zumindest einem der vorhergehenden Ansprüche, **dadurch gekennzeichnet, dass** die Styrolblockcopolymere funktionalisiert sind, insbesondere maleinsäureanhydridmodizifizert, silanmodifiziert und/oder epoxidiert.

11. Haftklebfolienstreifen nach zumindest einem der vorhergehenden Ansprüche, **dadurch gekennzeichnet, dass** der Anteil von Styrolblockcopolymer in den Klebemassen der mittleren Schichten und/oder der äußeren Schichten 20 bis 70 Gew.-%, vorzugsweise 30 bis 60 Gew.-% und besonders bevorzugt 35 bis 55 Gew.-%, beträgt.

12. Haftklebfolienstreifen nach zumindest einem der vorhergehenden Ansprüche, **dadurch gekennzeichnet, dass** die Schichten weitere Abmischkomponenten enthalten, insbesondere Weichmacher, Alterungsschutzmittel, Verarbeitungshilfsmittel, Füllstoffe, Farbstoffe, optische Aufheller, Stabilisatoren, Endblockverstärkerharze.
